# EUROPEAN PATENT SPECIFICATION

(11) **EP 0 913 789 B1**
(45) Date of publication and mention of the grant of the patent: **10.12.2003**
(21) Application number: 98308826.1
(22) Date of filing: 28.10.1998
(51) Int. Cl.: G06F 17/60

(54) **Pre-paid links to networks servers**
Vorausbezahlte Links zu Netwerk-Server
Liens préalablement payés à des serveurs de réseau

(30) Priority: 31.10.1997 US 961984
(43) Date of publication of application: 06.05.1999
(73) Proprietor: SUN MICROSYSTEMS, INC., Palo Alto, California 94303 (US)
(72) Inventor: Neilsen, Jakob, Atherton, California 94027 (US)
(74) Representative: Read, Matthew Charles

(56) References cited:
- EP-A- 0 765 068
- WO-A-96/15505
- WO-A-96/39668
- WO-A-97/05555
- US-A- 5 003 584

## Description

The present invention relates to a method of controlling sponsored access to a resource, in a web comprising first and second http servers and an http client, for which payment is required and to a server for use in such a method.

Owners of electronic content that can be accessed via a computer network may charge a fee to view or download their content. For example, users may be required to pay for a subscription in order to access an online newspaper or magazine. Access to other types of content (i.e., software, music, and videos) may require the user to pay a one time fee in order to view or download it. Many examples of subscription and one time payment-required content can be found on the World Wide Web.

Payment for access to information may take any form, such as, credit cards, checks, electronic cash, and smart debit cards, Payments that require the transmission of data (e.g., credit cards, electronic cash, and smart debit cards) typically make use of an encryption technique. Many encryption techniques, such as public-private key cryptography, are known in the art.

Sponsors of websites, or similar sources of information on networks may want to provide users with hyperlinks to other online content, some of which may require a payment to view or download. For example, a World Wide Web page author or sponsor may want to provide a hyper link to a newspaper article that reported favourably on his product. Therefore, to encourage users to visit a payment-required site, such as an author or sponsor would like, in some cases, to enable a visitor to his network server (hereinafter website) to access the payment-required content for free. This capability has not been available in the prior art.

According to the present invention, there is provided a method of controlling sponsored access to a resource, in a web comprising first and second http servers and an http client, for which payment is required, the method comprising receiving a first http request from said client at the first http server, dynamically generating a document in response to said first http request, said document including means defining a request for a resource from the second server, which includes a billing account identifier associated with the first server, transmiting the document to the client, receiving a second http request from said client at the second server, determining whether the second http request meets a predetermined requirement, including that the request contains said billing account identifier and, if it is determined that the second request conforms to said requirement, sending the requested resource to said client, without receiving payment from the user of the client.

Preferably, said document is dynamically generated using a Java servlet or a common gateway interface program.

Preferably, the method includes the second server sending a payment request signal in dependence on the account identified by said billing account identifier.

Preferably, said means defining a request for a resource from the second server, defines a request additionally including a token which comprises one or more of a token number, an expiration date and expiration time. More preferably, the method includes generating said token at the first server in response to said first request, the generation of said token including encrypting token data using a private key associated with the first server. Still more preferably, said determination comprises selecting a public key in dependence on said identifier, decrypting said token using the selected public key and validating the decrypted token data.

According to the present invention, there is provided a server configured for use as the first server in a method according to the present invention, the server being configured to receive an http request from a client and, in response thereto, dynamically generate a document including means defining a request for a resource from another server, the request including a billing account identifier associated with the server generating said document and being subject to validation by said other server to allow sponsored access to said resource, and to transmit said document to said client.

According to the present invention, there is provided a computer program product for producing a server according to the present invention, the product comprising instructions for controlling a computer to respond to a received http request from a client by dynamically generating a document including means defining a request for a resource from another server, the request including a billing account identifier associated with the server generating said document and successfully validatable by said other server to allow sponsored access to said resource, and to transmit said documents to said client.

Embodiments of the present invention will now be described, by way of example, with reference to the accompanying drawings, in which:-
Figure 1A is an illustration of a computer of a type suitable for carrying out the invention.
**Figure 1B** is a block diagram of an exemplary bus architecture suitable for carrying out the invention.
**Figure 1C** is an illustration of an exemplary memory medium for carrying program information and data for use in carrying out the invention.
**Figure 1D** is a block diagram of an exemplary network suitable for carrying program and data information useful for carrying out the invention.
**Figure 2** is a flow chart of an exemplary process for making payment-required content available to users for free in accordance with one embodiment of the invention.
**Figure 3** is a flow chart of an exemplary source page generation process for generating a server document with pre-paid links in accordance with one embodiment of the invention.
**Figure 4** is a flow chart of an exemplary payment token generation algorithm in accordance with one embodiment of the invention.
**Figure 5** is a flow chart of an exemplary destination server process for handling requested pre-paid content.
**Figure 6** is a flow chart of one embodiment of a process for checking the validity of a pre-payment token and issuing an appropriate response.
**Figure 7** is a flow chart of one embodiment of a process for honoring a valid pre-payment token.
**Figure 8** is a flow chart of one embodiment of a process for maintaining a server pre-payment token database.
**Figure 9** is an example of a hyperlink with a customer identifier parameter and a pre-payment token.
**Figure 10** is an example of a pre-payment token that includes the customer identifier, the token counter value, and the token expiration date and time.

### NOTATIONS AND NOMENCLATURE

The detailed descriptions which follow may be presented in terms of program procedures executed on a computer or network of computers. These procedural descriptions and representations are the means used by those skilled in the art to most effectively convey the substance of their work to others skilled in the art.

A procedure is here, and generally, conceived to be a self-consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operations described herein which form part of the present invention; the operations are machine operations. Useful machines for performing the operation of the present invention include general purpose digital computers or similar devices.

The present invention also relates to apparatus for performing these operations. This apparatus may be specially constructed for the required purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove more convenient to construct more specialized apparatus to perform the required method steps. The required structure for a variety of these machines will appear from the description given.

### DESCRIPTION OF THE PREFERRED EMBODIMENT

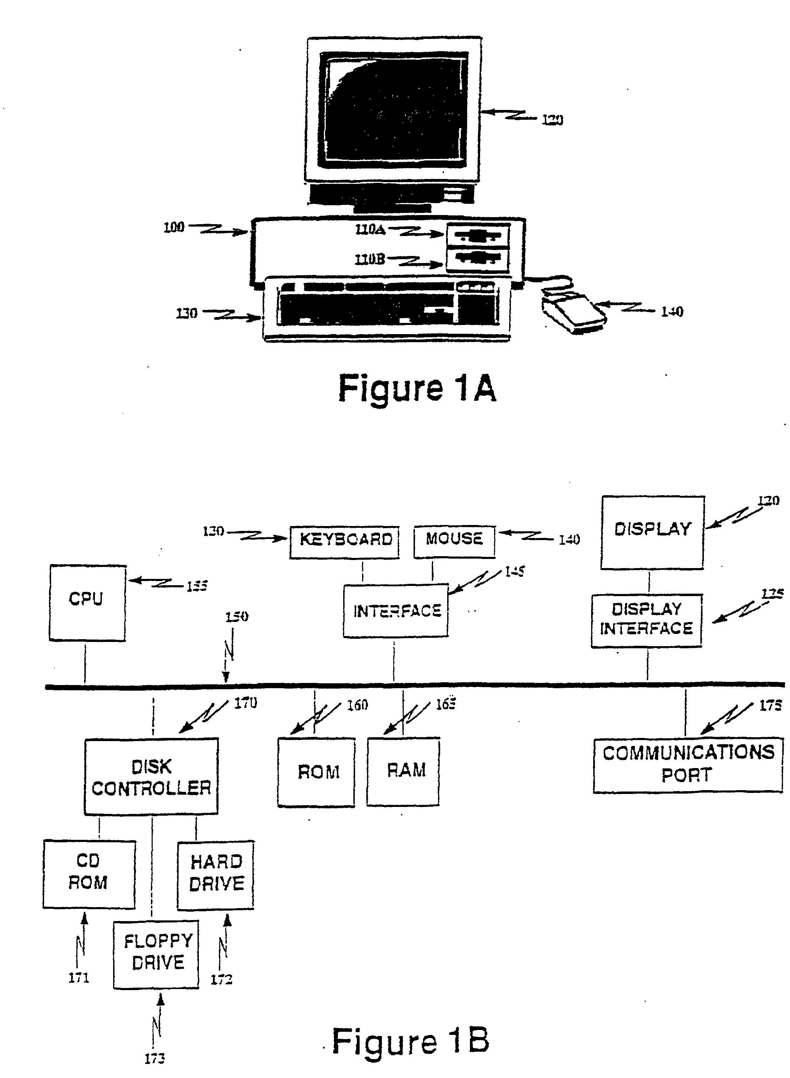

**Figure 1A** illustrates a computer of a type suitable for carrying out the invention. Viewed externally in **Figure 1A**, a computer system has a central processing unit **100** having disk drives **110A** and **110B.** Disk drive indications **110A** and **110B** are merely symbolic of a number of disk drives which might be accommodated by the computer system. Typically, these would include a floppy disk drive such as **110A**, a hard disk drive (not shown externally) and a CD ROM drive indicated by slot **110B**. The number and type of drives varies, typically, with different computer configurations. The computer has the display **120** upon which information is displayed. A keyboard **130** and a mouse **140** are typically also available as input devices. Preferably, the computer illustrated in **Figure 1A** is a SPARC workstation from Sun Microsystems, Inc.

**Figure 1B** illustrates a block diagram of the internal hardware of the computer of **Figure 1A**. A bus **150** serves as the main information highway interconnecting the other components of the computer. CPU **155** is the central processing unit of the system, performing calculations and logic operations required to execute programs. Read only memory **(160)** and random access memory **(165)** constitute the main memory of the computer. Disk controller **170** interfaces one or more disk drives to the system bus **150.** These disk drives may be floppy disk drives, such as **173,** internal or external hard drives, such as **172,** or CD ROM or DVD (Digital Video Disks) drives such as **171.** A display interface **125** interfaces a display **120** and permits information from the bus to be viewed on the display. Communications with external devices can occur over communications port **175.**

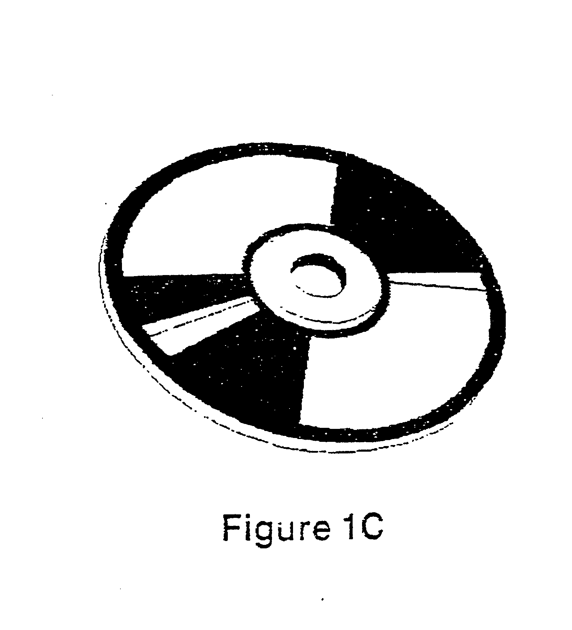

**Figure 1C** illustrates an exemplary memory medium which can be used with drives such as **173** in **Figure 1B** or **110A** in **Figure 1A.** Typically, memory media such as a floppy disk, or a CD ROM, or a Digital Video Disk will contain the program information for controlling the computer to enable the computer to perform its functions in accordance with the invention. Program and data information from such media is transmitted, in accordance with the invention, over a transmission link in the form of a carrier wave.

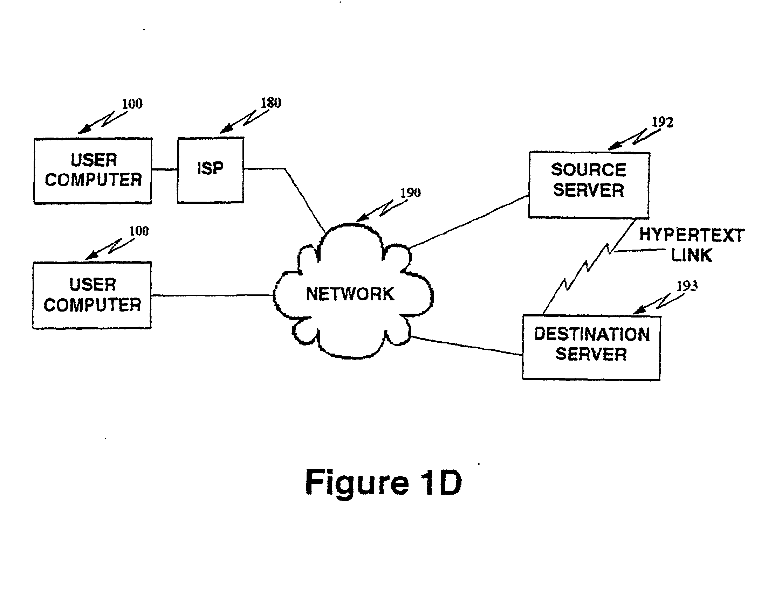

**Figure 1D** illustrates the use of computers of the type shown in **Figures 1A** and **1B** in a network environment. Such computers can be used as user computers **(100, 100')** or as servers **(192, 193),** sometimes with nominal differences of configuration. A user computer may connect to the network **190** either directly **(100')** or via a network service provider, such as an internet service provider **180.** Program and data information used in carrying out the invention can be transmitted as a carrier wave over the network(s).

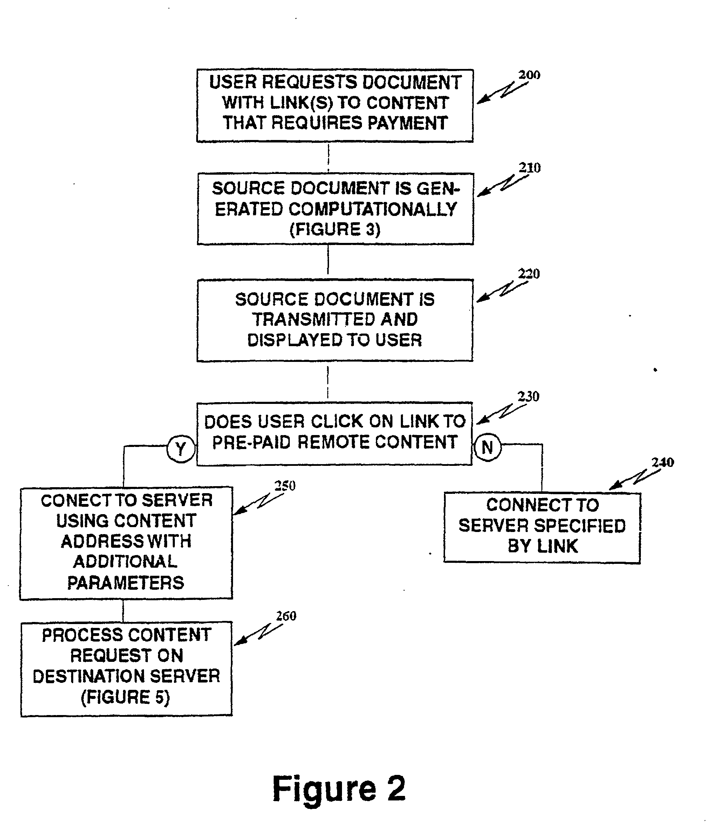

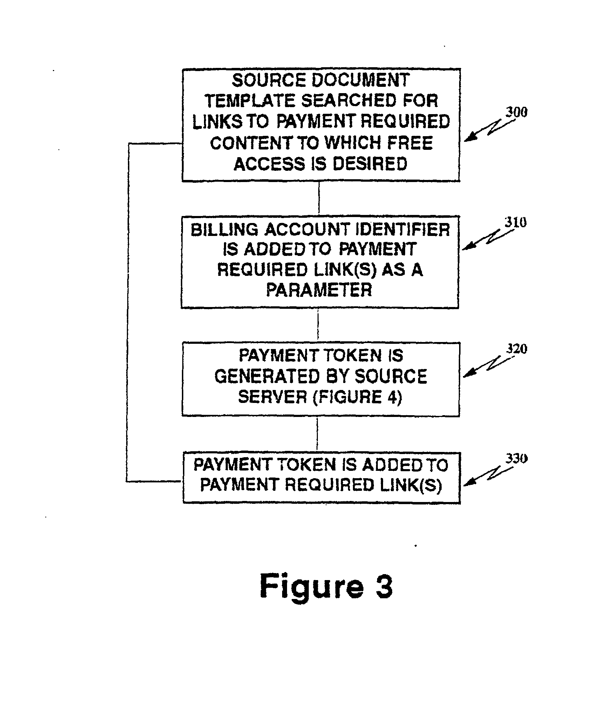

**Figure 2** is a flow chart of an exemplary pre-paid content hyperlink process in accordance with one embodiment of the invention. When a user requests a document that contains one or more links to content for which payment is required **(200),** the document is generated **(210)** by the source server **192.** The document can be generated by using a Java servelet or a common gateway interface (CGI) program. In any event, it is generated anew for each access. An exemplary document generation process is described in detail in conjunction with **Figure 3.** Once the source document has been generated it is transmitted and displayed to the user **220.** While viewing the source document the user may decide to click on a link to remote content **230.** Remote content is, for example, any content that is not controlled by the sponsor of the page or document being accessed. For example, a link to an additional document that is part of the current site would not normally be considered a link to remote content.

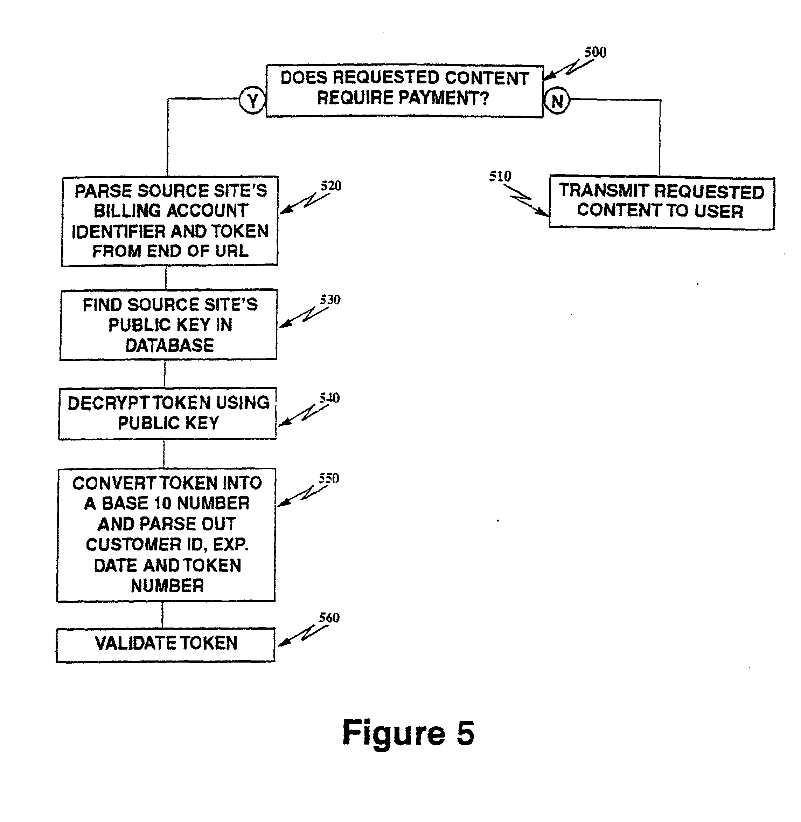

If the user clicks on a link to remote content the access that is not pre-paid (regular link) then access to that content is handled using standard techniques known in the art **240**. If the user decides to click on a link to content for which a payment is required (payment-required content) then the address of the content (regular hypertext link) , typically the universal resource locator (URL) or the address, and payment parameters associated with that link (if the link is a pre-paid link) are transmitted **250** to the appropriate destination server **193.** When the destination server **193** receives the URL and added parameters, it processes the request for content **260** and collects the payment, by, for example, storing digital cash or debiting the sponsor's account. The processing of requested content is discussed in detail in conjunction with **Figure 5.**

**Figure 3** is an exemplary flow chart that describes an exemplary the process used to generate a source document in accordance with one embodiment of the invention. In this example a template for a source document is searched for links to payment-required content **300** to which the document author or sponsor desires to provide free access. When one is found the program adds payment information to the link as a parameter **310,** thus making it a pre-paid link.

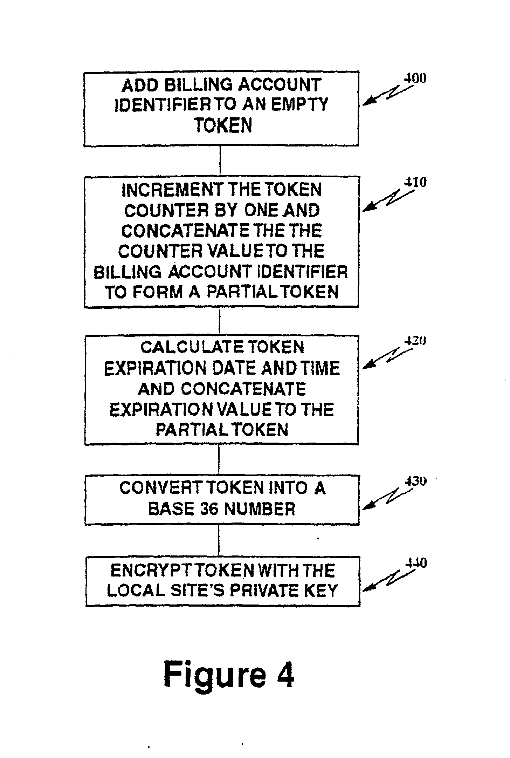

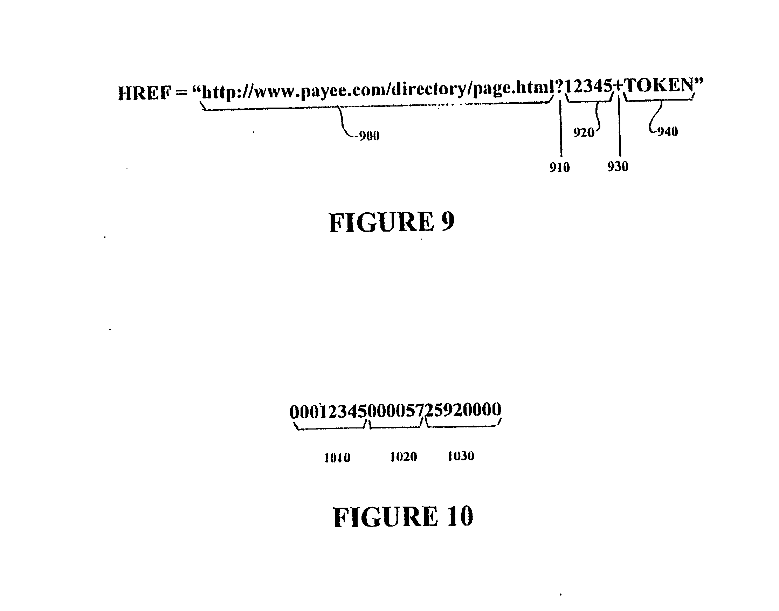

In a preferred embodiment using HTML, a pre-paid link would have the format **900** detailed in **Figure 9.** The site identifier would be followed by a specification of the desired page followed by a marker, such as a question mark, **910** which indicates that parameter values follow. The parameter values constitute exemplary payment information. A first parameter in this example is a billing account identifier **920.** Next a payment token is generated by the source server **320.** The token generation process is discussed in detail in conjunction with **Figure 4.** The payment token is then added to the pre-paid link **330.** In the preferred HTML embodiment the token is added to the billing account identifier **920** and is separated from it by a plus sign **930.** The process then repeats until the end of the document file has been reached.

**Figure 4** is a flow chart of an exemplary process for generating payment tokens in accordance with one embodiment of the invention. The exemplary payment token (e.g. **Figure 10**) is generated by adding a billing account identifier **(1010)** for an author or sponsor of a document on the server to an empty token **400.** The size, in characters, of the billing account identifier is preferably known to both the source and destination processes. In a preferred embodiment the billing account identifier would be left padded with zeros, if necessary, in order to satisfy a fixed size requirement. The token counter is incremented by one and the new token counter value **(1020)** is concatenated to the billing account identifier. See step **410.** The token counter size is also preferably known to both the source and destination processes. In a preferred embodiment the token counter should be left padded with zeros, if necessary, to fulfill the size requirement. The token counter is a software counter or a hardware counter on the source server, which ensures that all tokens generated have a unique value. The token expiration data and time is calculated and this value **(1030)** is concatenated to the other components of the token **(420).** The length of time a token will remain valid may be previously agreed upon by the source and destination owners. The expiration date and time may be preferably calculated as the number of seconds after midnight from a predetermined date (i.e., January 1, **1997).** The token number (see **Figure 10)** may be large, in which case it is then converted into a base 36 number in order to compress it **(430).** Base 36 numbers make use of the digits 0-9 and the letters A-Z. The base 36 number is preferably encrypted using the current site's private key **440.**

Public-key/private-key cryptography is a known technique for providing security when transmitting data over a communications network. Public-private key cryptography is based on a mathematical process that generates two keys where one key cannot be determined from the other. In use, the private key is known only to the user. Typically it is a long series of characters stored on the user's computer. The public key is "published" , i.e. it is made available to anyone who wants it. When a user needs to send a secure transmission, the data is encrypted using one of the private or public keys. When the transmission is received the recipient can decrypt the data using the other of the private or public key. The originating site would typically encrypt with its private key and the pre-paid content provider would decrypt using the originating site's public key.

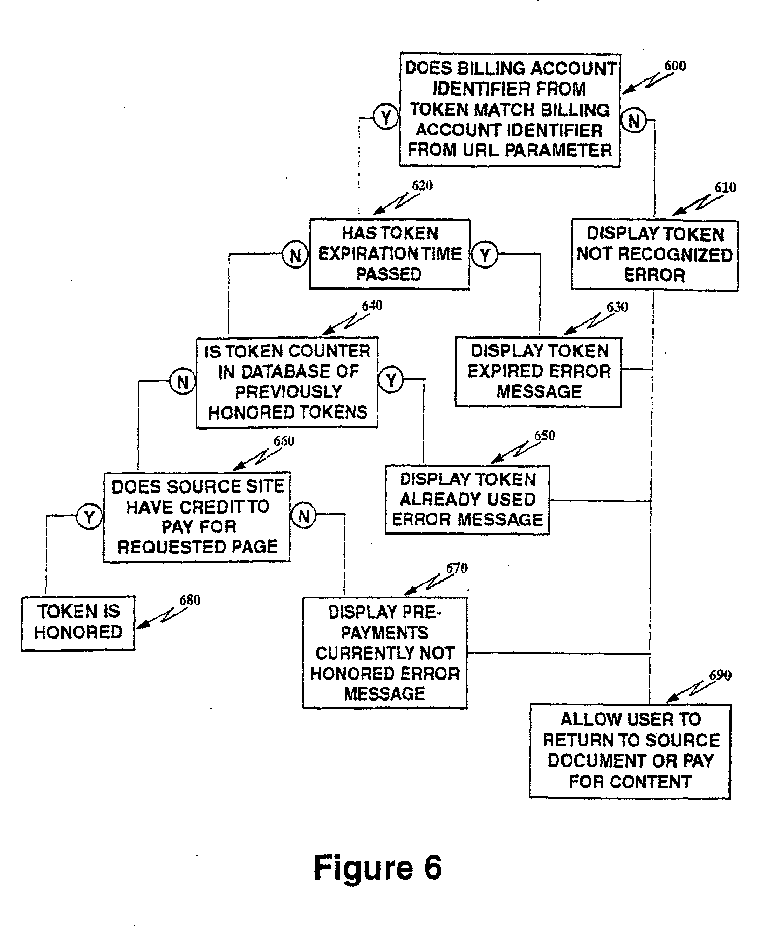

**Figure 5** is a flow chart of an exemplary destination server process for handling requests for content in accordance with an exemplary embodiment of the invention. The destination server **(193)** first determines if the requested content requires a payment **500.** This can be done by querying a database of payment-required URLs on the destination server. If the requested content does not require a payment then the destination server transmits the content to the user **510.** If the content requires payment to view or download it and the request has arrived from a pre-paid link, then the destination server parses the source site's billing account identifier and the payment token from the end of the URL (see **Figure 9**). This parse procedure can be done easily by looking for the characters between the question mark **(910)** and the plus sign **(930).** The destination server uses the source site's billing account identifier to find the source site's public key in a database **530.** The destination server uses the public key to decrypt the token **540.** The token is then converted back into a base 10 number and the source site's billing account identifier, the token expiration data and time, and the token counter value are parsed out **550.** The parse procedure can be accomplished because the size of the customer identifier and token counter are known. The destination server then attempts to validate the token **560.** The token validation process is discussed in detail in conjunction with **Figure 6.**

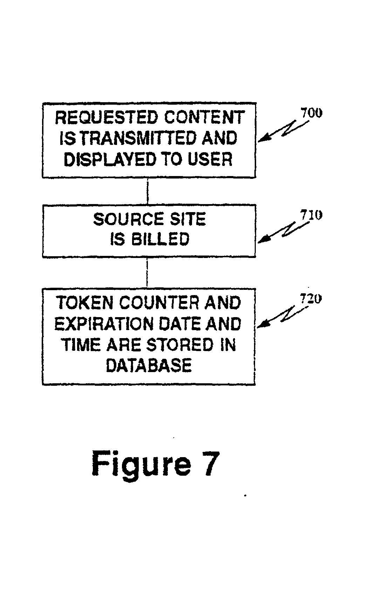

**Figure 6** is a flow chart of an exemplary token validation process in accordance with one embodiment of the invention. The token validation process, which runs on the destination (pre-paid content provider) server **(193),** first attempts to match the source site's billing account identifier included in the parameter **(920)** with the source site's billing account identifier included in the token **(1010) 600.** If the two numbers do not match, an error message stating the token cannot be recognized will be displayed to the user **610.** Any error message given to the user will result in an option to return to the source document to try the link again or to pay for the content themselves **690.** If the billing account identifiers match, then the token validation program will check the expiration date and time against the current system date and time **620.** If the token has expired then a token has expired error message will be displayed to the user **630.** If the token has not expired then the token validation program will attempt to find the token counter in its database of previously honored tokens **640.** If the token counter is found in the database then a message stating that the token has already been used will be displayed to the user **650.** If the token counter is not found in the database then the token validation program will check to see if the source site has sufficient credit to pay for the transaction **660.** Since payment may take many forms the token validation program will first determine the payment type by accessing the customer's account information in the database. If, for example, the customer makes pre-payments then the validation program will determine if enough money remains in the account to pay for the transaction. In other cases the customer may have established credit, in which case the validation program may need to check the customer's credit limit. If the customer is not able to pay for the transaction then a message stating that pre-payments from the source site are currently not being honored, will be displayed to the user **670.** If the customer has the ability to pay for the transaction then the token is honored **680.** The token honored process is discussed in detail in conjunction with **Figure 7.**

**Figure 7** is a flow chart of an exemplary process of a destination server honoring a valid token in accordance with one embodiment of the invention. When a token is honored the requested content is transmitted and displayed to the user **700.** In addition, the source site is billed in accordance with the payment arrangements made between the source and destination sites **710.** If, for example, the source site has established a pre-paid account with the destination site then the payment for the transaction is subtracted from the amount of money in the pre-paid account. If, on the other hand, the destination site bills the source site on some regular basis then the number of transactions in the source site's account will be incremented by one. In addition to billing, the token counter and expiration time and date are stored in an honored tokens database **720** indexed, for example, by sponsor. As before, time is preferably stored as a number of seconds after midnight on a reference date. This database is used in the validation process **640.**

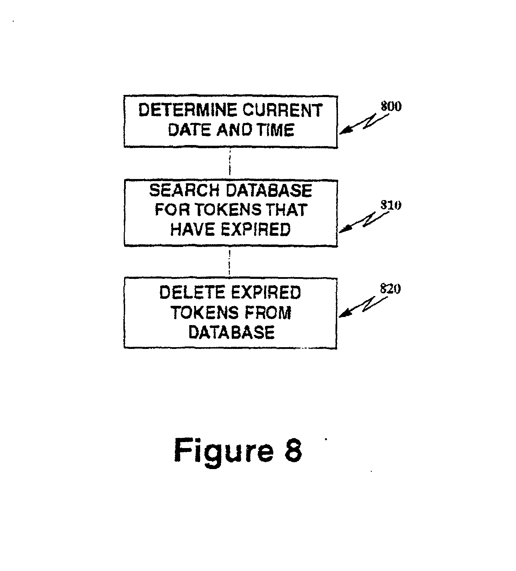

**Figure 8** is a flow chart of an exemplary maintenance process for the honored tokens database. Since tokens should only be kept in the honored tokens database until their expiration time a maintenance program will need to be run on the database at a regular interval (i.e., every hour). First, the current time and date are determined from the system clock 800. Next, the database is queried for tokens that have expired based on the current time **810**. Finally, expired tokens are deleted from the database **820**.

Although the present invention has been described and illustrated in detail, it is clearly understood that the same is by way of illustration and example only and is not to be taken by way of limitation, the scope of the present invention being limited only by the terms of the appended claims and their equivalents.

## Claims

1. A method of controlling sponsored access to a resource, in a web comprising first and second http servers (192, 193) and an http client (100), for which payment is required, the method comprising:-
receiving a first http request from said client (100) at the first http server (192);
dynamically generating a document in response to said first http request, said document including means defining a request for a resource from the second server (193), which includes a billing account identifier (920) associated with the first server (192);
transmiting the document to the client (100);
receiving a second http request from said client (100) at the second server (193);
determining whether the second http request meets a predetermined requirement, including that the request contains said billing account identifier (920); and
if it is determined that the second request conforms to said requirement, sending the requested resource to said client (100), without receiving payment from the user of the client (100).

2. A method according to claim 1, wherein said document is dynamically generated using a Java servlet or a common gateway interface program.

3. A method according to claim 1 or 2, including the second server (193) sending a payment request signal in dependence on the account identified by said billing account identifier (920).

4. A method according to any preceding claim, wherein said means defining a request for a resource from the second server (193), defines a request additionally including a token (940) which comprises one or more of a token number (1020), an expiration date and expiration time (1030).

5. A method according to claim 4, including generating said token (940) at the first server (192) in response to said first request, the generation of said token including encrypting token data using a private key associated with the first server (192).

6. A method according to claim 6, wherein said determination comprises selecting a public key in dependence on said identifier (920), decrypting said token (940) using the selected public key and validating the decrypted token data.

7. A server configured for use as the first server in a method according to any preceding claim, the server (192) being configured to receive an http request from a client (100) and, in response thereto, dynamically generate a document including means defining a request for a resource from another server (193), the request including a billing account identifier (920) associated with the server generating said document and being subject to validation by said other server (193) to allow sponsored access to said resource, and to transmit said document to said client (100).

8. A computer program product for producing a server according to claim 7, the product comprising instructions for controlling a computer to respond to a received http request from a client (100) by dynamically generating a document including means defining a request for a resource from another server (193), the request including a billing account identifier (920) associated with the server generating said document and successfully validatable by said other server (193) to allow sponsored access to said resource, and to transmit said documents to said client (100).

## Patentansprüche

1. Verfahren zum Steuern des gesponserten Zugangs zu einer Ressource in einem einen ersten und einen zweiten HTTP-Server (192, 193) und einen HTTP-Client (100) umfassenden Web, für die eine Zahlung erforderlich ist, wobei das Verfahren die folgenden Schritte umfasst:
Empfangen einer ersten HTTP-Anforderung von dem genannten Client (100) an dem ersten HTTP-Server (192);
dynamisches Erzeugen eines Dokumentes als Reaktion auf die genannte erste HTTP-Anforderung, wobei das genannte Dokument Mittel zum Definieren einer Anforderung einer Ressource von dem zweiten Server (193) aufweist, die eine mit dem ersten Server (192) assoziierte Gebührenberechnungskontokennung (920) beinhaltet;
Senden des Dokumentes zu dem Client (100);
Empfangen einer zweiten HTTP-Anforderung von dem genannten Client (100) an dem zweiten Server (193);
Ermitteln, ob die zweite HTTP-Anforderung eine vorbestimmte Forderung erfüllt, einschließlich der, dass die Anforderung die genannte Gebührenberechnungskontokennung (920) enthält; und
wenn ermittelt wird, dass die zweite Anforderung die genannte Forderung erfüllt, Senden der angeforderten Ressource zu dem genannten Client (100), ohne eine Bezahlung vom Benutzer des Clients (100) zu erhalten.

2. Verfahren nach Anspruch 1, bei dem das genannte Dokument dynamisch mit einem Java-Servlet oder einem Common Gateway Interface Programm erzeugt wird.

3. Verfahren nach Anspruch 1 oder 2, wobei der zweite Server (193) ein Zahlungsanforderungssignal in Abhängigkeit von dem Konto sendet, das durch die genannte Gebührenberechnungskontokennung (920) identifiziert wird.

4. Verfahren nach einem der vorherigen Ansprüche, bei dem das genannte Mittel zum Definieren einer Anforderung einer Ressource von dem zweiten Server (193) eine Anforderung definiert, die zusätzlich ein Token (940) enthält, das eine Token-Nummer (1020), ein Ablaufdatum und/oder eine Ablaufzeit (1030) umfasst.

5. Verfahren nach Anspruch 4, umfassend das Erzeugen des genannten Tokens (940) an dem ersten Server (192) als Reaktion auf die genannte erste Anforderung, wobei die Erzeugung des genannten Tokens das Verschlüsseln von Token-Daten mit einem mit dem ersten Server (192) assoziierten Private-Key beinhaltet.

6. Verfahren nach Anspruch 5, bei dem die genannte Ermittlung das Wählen eines Public-Key in Abhängigkeit von der genannten Kennung (920), das Entschlüsseln des genannten Tokens (940) mit dem gewählten Public-Key und das Validieren der entschlüsselten Token-Daten umfasst.

7. Server, der für die Verwendung als der erste Server in einem Verfahren nach einem der vorherigen Ansprüche konfiguriert ist, wobei der Server (192) so konfiguriert ist, dass er eine HTTP-Anforderung von einem Client (100) empfängt und als Reaktion darauf dynamisch ein Dokument erzeugt, mit Mitteln zum Definieren einer Anforderung einer Ressource von einem anderen Server (193), wobei die Anforderung eine Gebührenberechnungskontokennung (920) beinhaltet, die mit dem das genannte Dokument erzeugenden Server assoziiert ist und die von dem genannten anderen Server (193) validiert wird, um einen gesponserten Zugang zu der genannten Ressource zuzulassen und um das genannte Dokument zu dem genannten Client (100) zu übertragen.

8. Computerprogrammprodukt zum Erzeugen eines Servers nach Anspruch 7, wobei das Produkt Anweisungen umfasst, um einen Computer so zu steuern, dass er auf eine empfangene HTTP-Anforderung von einem Client (100) durch dynamisches Generieren eines Dokumentes mit Mitteln zum Definieren einer Anforderung einer Ressource von einem anderen Server (193) reagiert, wobei die Anforderung eine Gebührenberechnungskontokennung (920) beinhaltet, die mit dem das genannte Dokument erzeugenden Server assoziiert ist und die von dem genannten anderen Server (193) validiert werden kann, um einen gesponserten Zugang zu der genannten Ressource zuzulassen und um das genannte Dokuemnt zu dem genannten Client (100) zu übertragen.

## Revendications

1. Un procédé pour contrôler, dans un web qui comprend un premier et un deuxième serveurs http (192, 193) et un client http (100), un accès commandité à une ressource pour laquelle un paiement est requis, le procédé comprenant :
réception, au niveau du premier serveur http (192), d'une première requête http émise par ledit client (100) ;
génération dynamique d'un document en réponse à ladite première requête http, ledit document comportant des moyens qui définissent une requête relative à une ressource provenant du deuxième serveur (193), qui inclut un identificateur de compte de facturation (920) associé au premier serveur (192) ;
transmission du document au client (100) ;
réception, au niveau du deuxième serveur (193), d'une deuxième requête http émise par ledit client (100) ;
détermination de la conformité de la deuxième requête http à des exigences prédéterminées, y compris la présence dudit identificateur de compte de facturation (920) dans la requête ;
s'il est déterminé que la deuxième requête est conforme auxdites exigences, envoi de la ressource requise audit client (100), sans recevoir un paiement de la part de l'utilisateur du client (100).

2. Un procédé selon la revendication 1, selon lequel ledit document est généré dynamiquement en utilisant un Servlet Java ou un programme de jonction à passerelle commune.

3. Un procédé selon la revendication 1 ou 2, qui comprend l'envoi, par le deuxième serveur (193), d'un signal de requête de paiement qui est dépendant du compte identifié par ledit identificateur de compte de facturation (920).

4. Un procédé selon l'une quelconque des revendications précédentes, selon lequel lesdits moyens qui définissent une requête relative à une ressource provenant du deuxième serveur (193) définissent une requête qui inclut de plus un jeton (940), lequel comprend un numéro de jeton (1020) ou davantage, une date d'expiration et une heure d'expiration (1030).

5. Un procédé selon la revendication 4, qui comprend la génération dudit jeton (940) au niveau du premier serveur (192) en réponse à ladite première requête, la génération dudit jeton comprenant le chiffrage des données du jeton en utilisant un code privé associé au premier serveur (192).

6. Un procédé selon la revendication 5, selon lequel ladite détermination comprend la sélection d'un code public qui est dépendant dudit identificateur (920), le déchiffrage dudit jeton (940) au moyen du code public sélectionné et la validation des données déchiffrées du jeton.

7. Un serveur configuré pour être utilisé comme le premier serveur dans le cadre d'un procédé selon l'une quelconque des revendications précédentes, le serveur (192) étant configuré pour recevoir une requête http émise par un client (100) et, en réponse à celle-ci, pour générer dynamiquement un document qui comprend des moyens qui définissent une requête portant sur une ressource qui provient d'un deuxième serveur (193), la requête comprenant un identificateur de compte de facturation (920) associé au serveur qui génère ledit document, et qui est soumis à une validation par ledit autre serveur (193) pour autoriser un accès commandité à ladite ressource et pour transmettre ledit document audit client (100).

8. Un produit consistant en un programme informatique pour produire un serveur selon la revendication 7, le produit contenant des instructions pour contrôler un ordinateur afin qu'il réagisse à la réception d'une requête http émise par un client (100) en générant dynamiquement un document qui inclut des moyens qui définissent une requête portant sur une ressource provenant d'un autre serveur (193), la requête comprenant un identificateur de compte de facturation (920) associé au serveur qui génère ledit document, et que peut valider avec succès ledit autre serveur (193) pour autoriser un accès commandité à ladite ressource et pour transmettre lesdits documents audit client (100) .
